Europäisches Patentamt

European Patent Office

Office européen des brevets

(11) Publication number: **0 556 843 A1**

## EUROPEAN PATENT APPLICATION

(21) Application number: **93102645.4**

(22) Date of filing: **19.02.93**

(51) Int. Cl.5: **C08L 23/20**

(30) Priority: **20.02.92 US 839136**

(43) Date of publication of application:
**25.08.93 Bulletin 93/34**

(84) Designated Contracting States:
**AT BE DE DK ES FR GB IT NL**

(71) Applicant: **PHILLIPS PETROLEUM COMPANY**
**5th and Keeler**
**Bartlesville Oklahoma 74004(US)**

(72) Inventor: **Hagenson, Mary Jane**
**2208 SE Kristin**
**Bartlesville, OK 74006(US)**
Inventor: **Efner, Howard Franklin**
**2100 Jefferson Road**
**Bartlesville, OK 74006(US)**
Inventor: **Hasselbring, Lori Callahan**
**Rural Route One, Box 517-D**
**Bartlesville, OK 74003(US)**
Inventor: **Beever, William Herbert**
**Rural Route Two, Box 2670**
**Bartlesville, OK 74006(US)**

(74) Representative: **Dost, Wolfgang,**
**Dr.rer.nat.,Dipl.-Chem. et al**
**Patent- & Rechtsanwälte Bardehle .**
**Pagenberg . Dost . Altenburg . Frohwitter .**
**Geissler & Partner, Postfach 86 06 20**
**D-81633 München (DE)**

(54) **Polyolefins with improved toughness and high clarity.**

(57) Stereoregular polymers of branched, higher-olefins can be blended with liquid polybutene(s) to produce a composition with improved flexibility and toughness, as well as maintaining high clarity.

## BACKGROUND OF THE INVENTION

Polyolefins, as a class of materials, tend to have excellent physical and chemical properties and are useful materials for fibers, films, and other molding resins, as well as pipe and drum, and injection molding applications. Improvement of polymer properties is a dominant factor in the development and production of olefin polymers. Several methods have been employed to improve various polymer properties. Prior art teaches that additives can be incorporated into a polymer to improve flexural strength and overall toughness. However, additives usually cause an increase in haze, or a decrease in polymer clarity.

Polymers with relatively high melting points, such as, for example, stereoregular polymers of branched, higher alpha-olefins, have been developed. These polymers are relatively clear, or transparent, and are useful in high temperature applications, such as, for example, microwave packaging, containers, or pipe and tubing. Improving the toughness, while maintaining clarity, of these polymers could expand the uses of these polymers, for example, into areas of injection molding, pipe and film applications. Therefore, a tough, still transparent, or clear, polymer with a relatively high melting point, is desirable.

## SUMMARY OF THE INVENTION

It is an object of this invention to provide an improved olefin polymer composition.

It is another object of this invention to provide an olefin polymer with improved flexural properties and impact strengths.

It is still another object of this invention to provide an olefin polymer composition useful for, but not limited to, pipe and drum, film and injection molding applications.

It is yet another object of this invention to provide a relatively clear stereoregular polymer of branched, higher alpha-olefins with improved flexural properties and impact strengths.

It is still another object of this invention to provide a process to prepare a relatively clear stereoregular polymer of branched, higher alpha-olefins with improved flexural properties and impact strengths, and increased resistance to tear propagation.

In accordance with this invention, a composition comprising from about 80 to about 99 weight percent, based on the total weight of the final product, of a solid, stereoregular polymer of a branched, higher alpha-olefin and from about 1 to about 20 weight percent, based on the total weight of the final product, of a liquid polybutene is provided.

In accordance with another embodiment of this invention, a process is provided to produce a composition comprising from about 80 to about 99 weight percent, based on the total weight of the final product, of a solid, stereoregular polymer of a branched, higher alpha-olefin and from 1 to about 20 weight percent, based on the total weight of the final product, of a liquid polybutene.

## DESCRIPTION OF THE PREFERRED EMBODIMENTS

### Polymers

This invention is particularly applicable to olefinic polymers which have a melting point higher than about 180°C, more preferably, a melting point of greater than about 190°C. Polymers produced from linear monomers, such as ethylene, propylene, butene, and hexene, usually have a lower melting point than polymers of branched, higher alpha-olefins. Thus, the polymers useful in this invention are homopolymers and copolymers of branched, higher alpha-olefins and mixtures thereof. Exemplary alpha-olefin monomers have from about 4 to 12 carbon atoms per molecule, and include, but are not limited to, 3-methyl-1-butene (3MB1), 3-methyl-1-pentene (3MP1), 4-methyl-1-pentene (4MP1), 4-methyl-1-hexene (4MH1), 3,3-dimethyl-1-butene (3,3DMB1), 4,4-dimethyl-1-hexene (4,4DMH1), and other similar monomers. Table I gives the approximate melting point of each homopolymer listed above.

2

Table I

| Polymerized Monomer | Approx. Melting Temp., °C |
|---|---|
| 3MB1 | 300 |
| 3MP1 | 370 |
| 4MP1 | 240 |
| 4MH1 | 196 |
| 3,3DMB1 | 400 |
| 4,4DMH1 | 350 |

The term "polymer", as used in this disclosure, includes homopolymers, copolymers, and blends, or mixtures of, homopolymers and copolymers. Copolymers comprise the product resulting from combining a branched, higher alpha-olefin with any other olefin monomer or monomers. For example, a branched, higher alpha-olefin can be polymerized in the presence of, or in series with, one or more olefin monomers. Generally, applicable comonomers have from about 2 to about 18 carbon atoms and preferably, have from about 8 to about 16 carbon atoms. Most preferably, the comonomer or comonomers are alpha-olefins. Longer chain, linear olefins are preferred in that they are easier to copolymerize with branched, higher alpha-olefins and can impart increased clarity, stability, and impact strength to the resultant polymer. Exemplary comonomers include, but are not limited to, 1-octene, 1-decene, 1-dodecene, 1-tetradecene, 1-hexadecene, and other higher olefins. Most preferably, a comonomer is selected from the group consisting of 1-decene, 1-hexadecene, and mixtures thereof for best resultant polymer blend clarity and properties. A polymer can also be obtained by physically blending homopolymers and/or copolymers.

In general, it is preferred for the polymer to comprise at least about 85 mole percent moieties derived from branched, higher alpha-olefins, and more preferably, at least about 90 mole percent. Most preferably, the polymer comprises at least about 95 mole percent moieties derived from branched, higher alpha-olefins, which results in a polymer of superior strength and a high melting point.

After the polymer has been produced, it is essential, according to this invention, that the branched, higher alpha-olefin polymer be given a stabilizing prophylactic charge with a hindered phenol before additional processing of the polymer. The resultant solid product will be referred to by several names in this disclosure, including, but not limited to, stabilized, branched, higher alpha-olefin polymer; stabilized, solid, stereoregular polymer of a branched, higher alpha-olefin; and other variations of these names. The hindered phenol acts as an antioxidant and improves the heat, light, and/or oxidation stability of the polymer. As a result of the prophylactic charge, the polymer product can withstand drying and storage after the polymerization process. Any hindered phenol in an amount which improves the heat, light, an/or oxidation stability of the polymer is applicable. Exemplary hindered phenol compounds include, but are not limited to, 2,6-di-tert-butyl-4-methylphenol; tetrakis(methylene 3-(3,5-di-tert-butyl-4-hydroxyphenyl)propionate) methane; thiodiethylene bis(3-(3,5-di-tert-butyl-4-hydroxyphenyl)propionate); octadecyl 3-(3,5-di-tert-butyl-4-hydroxyphenyl)propionate; tris(3,5-di-tert-butyl-4-hydroxybenzyl)isocyanurate; 1,3,5-trimethyl-2,4,6-tris-di-tert-butyl-4-hydroxybenzyl)benzene; and/or 2,2'-methylene bis(4-methyl-6-tert-butylphenol). Preferably the hindered phenol antioxidant used for the prophylactic charge is selected from the group consisting of 2,6-di-tert-butyl-4-methylphenol; tetrakis(methylene (3,5-ditert-butyl-4-hydroxyphenyl)propionate)methane; octadecyl 3-(3,5-ditert-butyl-4-hydroxyphenyl)propionate; and mixtures thereof because of ease of availability, and economic reasons.

In addition to the essential prophylactic charge of hindered phenol, other antioxidants or stabilizers can be added to further stabilize the branched, higher alpha-olefin polymer or final product polymer, either before or after blending with liquid polybutene. The types(s) of stabilizer(s) used depends on the final application or use of the polymer. Numerous polymer additives are commercially available and are usually selected from the group consisting of hindered phenols, organic phosphites, hindered amine light stabilizers, and mixtures thereof.

The total polymer stabilizer package that can be added which comprises the essential hindered phenol antioxidant prophylactic charge, and the optional additional hindered phenol(s), organic phosphite(s), and/or hindered amine light stabilizer, is usually added to the polymer in the range of about 0.05 to about 2 parts by weight of total stabilizer(s) per 100 parts by weight of final product polymer (phr). Preferably, the hindered phenol prophylactic charge comprises an amount in the range of about 0.1 to about 1 phr, and most preferably in an amount in the range of about 0.1 to about 0.8 phr. If insufficient hindered phenol is present, oxidative degradation of the polymer can occur. The presence of excess hindered phenol can interfere with the blending process. If desired, additional stabilizers, i.e., excess of 2 phr, can be used any

3

time after the blending process, depending on the desired final polymer properties.

Other additives can optionally be incorporated into the polymer, before and after blending with liquid polybutene, to achieve additionally desired beneficial final product polymer properties. General exemplary additives include, but are not limited to, antioxidants, antioxidant synergists, UV absorbers, nickel stabilisers, pigments, plastifying agents, optical brighteners, antistatic agents, flame retardants, lubricating agents, more anticorrosive agents, metal inhibitors, and the like. Processing lubricants can also be added to enhance polymer properties. Examples of processing lubricants include, but are not limited to, fatty acids containing about 10 to about 20 carbon atoms and the metal salts thereof. Usually, metal stearates, such as, for example, calcium stearate and zinc stearate, and/or metal laurates are used as processing lubricants and/or acid scavengers for polyolefins. If corrosion is a potential problem, one or more corrosion inhibitors can be added.

Any additive can be combined with the branched, higher alpha-olefin polymers and liquid polybutene, prior to, during, and/or subsequent to blending, according to any method known in the art. Examples of incorporation methods include, but are not limited to, dry mixing, in the form of a powder, and wet mixing in the form of a solution or slurry. In these types of methods, the polymer can be in any form, such as, for example, fluff, powder, granulate, pellet, solution, slurry, and/or emulsion. For ease of operation, the initial prophylactic charge of hindered phenol is usually solution or slurry mixed with the branched, higher alpha-olefin polymer prior to drying and handling of the branched, higher alpha-olefin polymer. Any additional stabilizers or additives can be combined with the branched, higher alpha-olefin polymer prior to blending, and/or added during blending of the two component polymers.

The polybutene portion of the blend product is a low molecular weight butene polymer, normally liquid at standard conditions, and can be hydrogenated, partially hydrogenated, or not hydrogenated. The polybutene portion of the blend product is distinguishable from a plasticizer in that the polybutene is normally liquid at standard conditions, whereas plasticizers are normally solids at standard conditions. Physical properties of applicable polybutenes are listed below in Table II.

Table II

| Analysis | Procedure | Approximate Broad Range | Approximate Preferred Range | Most Preferred Range |
|---|---|---|---|---|
| Viscosity, Kinematic 38°C(100°F),cSt | ASTM D445 | <250 | 20-150 | 20 - 150 |
| Flash Point Cleveland open cup, °C,min | ASTM D92 | <200 | 135-145 | 135 - 141 |
| Specific Gravity, at 15.5°C | ASTM D1298 | <0.89 | 0.82 - 0.865 | 0.83 - 0.86 |
| Viscosity, Saybolt Universal 38°C(100°F), SUS | ASTM D2161 | <35,000 | 100 - 1200 | 120 - 1010 |
| 99°C(212°F), SUS | | <1000 | 30 - 90 | 40 - 88 |
| Number Average Molecular Wt, Mn | Vapor Phase Osmometry | <900 | 300 - 500 | 310 - 470 |
| Viscosity Index | ASTM D2270 | <110 | 60 - 95 | 65 - 95 |
| Fire point, Cleveland open Cup, °C | ASTM D92 | <230 | 140 - 167 | 150 - 166 |
| Flash point, Pensky-Martens closed tester, °C | ASTM D93 | <160 | 110 - 137 | 120 - 135 |
| Pour Point, °C | ASTM D97 | <-7 | -60 - -35 | -55 - -35 |
| Density, lb/gal | ASTM D1298 | <7.4 | 6.5 - 7.15 | 6.8 - 7.15 |
| Refractive Index, $N_{20}D$ | ASTM D1218 | <1.49 | 1.45 - 1.48 | 1.46 - 1.48 |
| Acid Number, MgKOH/g | ASTM D974 | <0.5 | - | - |
| Total Sulfur, ppm | x-ray analysis | <7 | - | - |
| Evaporation loss, wt% | ASTM D972, 10 hr at 99°C (212°F) | >1 | 6 - 15 | 6 - 12 |

Polybutenes having physical properties within the specified broad ranges are applicable for use in this invention. Use of a polybutene having physical properties within the most preferred ranges can produce a polymer blend product with high clarity and desirable strong, tough properties.

Exemplary polybutenes are available from Amoco Chemical Company and have a commercial designation of L-14®, L-14E®, L-50® and L-100®.

Polymer Blend Products

The stabilized branched, higher alpha olefin polymer and polybutene blend product usually comprises from about 80 to about 99, preferably from about 90 to about 99, weight percent of a stabilized, solid, stereoregular polymer of a branched higher alpha-olefin and from about 1 to about 20, preferably from about 1 to about 10, weight percent of a liquid polybutene, based on the total weight of the product. Most preferably, the polymer blend product comprises from 90 to 95 weight percent stabilized, branched, higher alpha olefin polymer and from 5 to 10 weight percent liquid polybutene based on the total weight of the polymer blend product, for ease of production and optional resultant physical properties.

The branched, higher alpha olefin polymer and polybutene portions can be blended in accordance with any method known in the art. Exemplary methods include, but are not limited to, a physical blend of both portions either immediately after polymer production, such as, for example, immediately following polymerization reactors arranged in parallel, or a blend of both portions physically removed from polymerization reactor output; use of one reactor with dual catalyst feed; and/or a series of reactors wherein one portion is produced immediately preceding or subsequent to the other portion.

All blend methods have advantages and disadvantages. Preferably, in order to maintain blend product characteristics integrity, a physical blending process is used. The two components, either in fluff, powder, flake, pellet, or liquid form, can be preblended and/or fed simultaneously into an extrusion line. In all blending methods, it is most preferred to contact as much surface area of the stabilized, branched, higher alpha-olefin polymer with a liquid polybutene. Thus, most preferably, the stabilized, branched, higher alpha-olefin polymer is in fluff, powder, and/or flake form when initially contacted with liquid polybutene. Although pellets, or larger particles of the branched, higher alpha-olefin polymer can be used, less surface area is contacted with liquid polybutene, and the resultant blend polymer product is not as uniform and usually does not have as good resultant physical characteristics.

One example of a physical blending process is to dry blend a stabilized, branched, higher alpha-olefin polymer with a liquid polybutene prior to introduction into an extruder. As stated earlier, most preferably, the branched, higher alpha-olefin polymer is in powder, fluff, and/or flake form, for maximum surface contact with liquid polybutene. Dry blending conditions usually include temperatures from about room temperature (about 20°C) up to about 120°C and blending times within a range of about a few seconds to minutes, such as, for example, about 2 seconds to about 5 minutes.

Another, most preferred, example of a physical blending process is to melt blend the stabilized, branched, higher alpha-olefin polymer and liquid polybutene in a pelletizing extruder, due to ease of blending and commercial considerations, by elimination of an earlier step or process for pre-dry blending, and still resulting in a novel, improved polymer blend product. Banbury® mixers and single or twin screw extruders can be utilized. The extrusion line can melt the stabilized, branched higher alpha-olefin polymer portion and homogenize the stabilized, branched higher alpha-olefin polymer and polybutene molecularly to produce a uniform product. Exemplary types of extrusion lines include, but are not limited to, single screw extrusion, twin screw extrusion, mixture gear pumps and/or batch mixing. Most preferably, this physical extrusion, or melt-blending process is accomplished by injecting liquid polybutene into the feed throat at a rate appropriate to yield the desired final blend polymer product composition, or polybutene loading. During extrusion blending, the temperature of the polymers introduced into the extruder will generally be between about room temperature and a temperature near about the melting point of the polymer; the outlet temperature of the extrusion blended polymer product is usually within a range of between about the melting point of the polymer and up to about 160°C above the melting point, preferably within a range between the melting point of the polymer and up to about 100°C above the melting point. Most preferably, for best resultant polymer blend properties, the outlet temperature of the extruder is within the range of between the melting point of the polymer and up to 60°C above the melting point of the polymer. Thus, optimal blending temperature ranges can vary, depending on the stabilized, branched, higher alpha-olefin polymer used. For example the most preferred blending temperature range for polymers of 3-methyl-1-hexene is from 300°C to 360°C, for polymers of 3-ethyl-1-hexene is from 196° to 256°C, and for polymers of 4-methyl-1-pentene is from 240° to 300°C, and specifically, from 260° to 285°C.

Intensive mixing results in a superior polymer with higher impact properties. Thus mixing times within a range of less than about 1 second to about 30 minutes can be used; preferably mixing times within a range of about 1 second to about 15 minutes can be used. Most preferably, to minimize thermal exposure, and yet produce a polymer blend product composition with higher impact properties, mixing times are within a range of 2 seconds to 5 minutes. Generally, the extruder rpm will be within a range of about 50 to about 500, preferably within a range of about 50 to about 450 rpm. Most preferably the extruder rpm is within a range of 100 to 400 rpm, in order to maintain intensive mixing which results in a superior polymer blend product.

An additional blending technique, while not preferred, is solution blending. Generally, when solution blending techniques are employed, the blending temperature will generally be about 25°C to about 50°C above the cloud point of the solution involved.

Stabilizers can be added to each polymer portion prior to blending, or to the blend, after or during blending, to prevent degradation of the polymer portions and blend product, as well as to maintain optimum physical properties. As stated earlier, the resultant polymer blend products have high clarity and desirable strong, tough properties, as shown by haze and light transmission analyses, as well as flexural strengths and impact strengths. As used in this specification, a decrease in the reported value of flexural modulus is an indication of improved flexibility. An increase in the reported value of impact strength, especially notched Izod values, is an indication of improved toughness, and resistance to tear propagation. The resultant polymer blend products are useful to produce film, extruded pipe, and injection molded products, with high clarity, excellent toughness and impact strength.

Generally, the properties of the inventive blended polymer products are those listed below in Table III.

Table III

| | Approximate Broad Range | Approximate Preferred Range | Most Preferred Range |
|---|---|---|---|
| Prophylactic Charged Stereoregular Polymer, wt. % | 80-99 | 90-99 | 90-95 |
| Liquid Polybutene, Wt. % | 1-20 | 1-10 | 5-10 |
| Notched Izod, ft-lb/in | 0.2-NB[a] | 0.5-NB | 1.6-NB |
| Unnotched Izod, ft-lb/in | NB | NB | NB |
| Tensile Strength, Ksi, 50 mm/min | | | |
| @ Yield | 0.5-5 | 1-5 | 2-5 |
| @ Break | 0.5-5 | 1-5 | 1-4 |
| Elongation, % | | | |
| @ Yield | 5-100 | 5-50 | 15-50 |
| @ Break | 100-1000 | 50-250 | 150-250 |
| HDT, °C at 66 psi | 50-100 | 50-90 | 60-90 |
| Flex Modulus, Ksi | 10-500 | 10-300 | 20-300 |
| Volume Resistivity, $X10_{15}$ ohm-cm | | | |
| 2 minutes | 2-50 | 5-50 | 10-30 |
| 5 minutes | 2-50 | 5-50 | 10-40 |
| Surface Resistivity, $X10_{15}$ ohm-cm 1 minute | 2-30 | 2-20 | 2-15 |
| Dielectric Constant | | | |
| 1KHz | 2.0-2.5 | 2.0-2.3 | 2.1-2.2 |
| 1MHz | 2.0-2.5 | 2.0-2.3 | 2.1-2.2 |
| Dielectric Strength V/mil, 1/16" in oil | 650-850 | 700-850 | 750-850 |
| Dissipation Factor | | | |
| 1KHz | 0.0000-0.0007 | 0.0000-0.0006 | 0.0002-0.0006 |
| 1MHz | 0.0000-0.0007 | 0.0000-0.0006 | 0.0002-0.0006 |
| Art Resistance, seconds | 150-250 | 180-250 | 190-250 |

[a] NB = No Break

7

EXAMPLES

Example I

This Example illustrates various physical properties of blends comprising PMP homopolymer and polybutene.

A series of tests were carried out by blending polymethylpentene (PMP) and polybutene (PB) to show various physical properties of the inventive compositions. Each sample was prepared by extruding the polymer components shown in Table IV in a Werner Pfliederer ZSK-30 twin screw extruder (screw identification number: 3587003) under the following conditions.

Barrel temperatures increased from 250°C at the throat to 270°C at the die. Resin and modifiers were dry blended and fed into the K-Tron feeder hopper. All downstream vent ports were closed during extrusions. Conditions for extrusion were: K-Tron feed rate of 500 with large diameter solid auger; screw speed 400 rpm, adjust feed rate and screw speed to get an overall productivity of 70-80 pounds/hour; and dry ice in the water bath.

The 75 ton New Britain Injection Molder was used to mold the test specimens. Typical operating conditions were: barrel temperature 500° to 540°F, nozzle temperature 540°F, 5 second injection time, 9 second injection/hold time, 25 second cool/cure time, injection/hold pressures of 300-350 psi/400-450 psi, and mold temperature of 100°F.

All tests were done according to American Society of Testing Materials (ASTM) standard procedures. The tensile strength of the sample was determined according to ASTM D638-86. The notched and unnotched izod impact strength of the samples were determined according to ASTM D256-84. Volume resistivity and surface resistivity were determined according to ASTM D257-83. Dielectric constant and dissipation factor were determined according to ASTM D150-81. Dielectric strength was determined according to ASTM D229. Arc resistance was determined according to ASTM D495. Test results are given in Table IV below.

## Table IV

### Properties of PMP Homopolymer and Polybutene Blends

| Components (wt%)[a] | Run 101 | Run 102 | Run 103 | Run 104 | Run 105 | Run 106 | Run 107 | Run 108 | Run 109 |
|---|---|---|---|---|---|---|---|---|---|
| PMP[b] | 99.5 | 94.5 | 92.0 | 89.5 | 92.0 | 84.5 | 84.5 | 89.5 | 89.5 |
| Polybutene,L-14[c] | 0 | 5.0 | 7.5 | 10.0 | 0 | 15 | 0 | 0 | 0 |
| Polybutene,L-100[c] | 0 | 0 | 0 | 0 | 7.5 | 0 | 15 | 0 | 0 |
| Polybutene,H-100 | 0 | 0 | 0 | 0 | 0 | 0 | 0 | 10 | 0 |
| Polybutene,H-300 | 0 | 0 | 0 | 0 | 0 | 0 | 0 | 0 | 10 |
| Irganox 1010[d] | 0.5 | 0.5 | 0.5 | 0.5 | 0.5 | 0.5 | 0.5 | 0.5 | 0.5 |

### Properties

| | Run 101 | Run 102 | Run 103 | Run 104 | Run 105 | Run 106 | Run 107 | Run 108 | Run 109 |
|---|---|---|---|---|---|---|---|---|---|
| Notched Izod (ft-lb/in) | 0.5 | 0.5 | 1.6 | 1.4 | 0.4 | 1.2 | 0.4 | 0.2 | 0.3 |
| Unnotched Izod (ft-lb/in) | 1.9 | NB[e] | NB | NB | NB | NB | NB | NB | NB |
| Tensile Strength (Ksi, 50 mm/min) | | | | | | | | | |
| @ Yield | 4.3 | 3.0 | 2.6 | 2.4 | ND[f] | | | | |
| @ Break | 2.8 | 2.0 | 1.9 | 1.8 | ND | | | | |
| Elongation, (%) | | | | | | | | | |
| @ Yield | 5 | 14 | 17 | 18 | ND | | | | |
| @ Break | 67 | 143 | 183 | 191 | ND | | | | |
| HDT (°C at 66 psi) | 75 | 75 | 74 | 79 | | | | | |
| Flex Modulus (Ksi) | 275 | ND | 73 | ND | ND | | | | |
| Volume Resistivity (x10$^{15}$, ohm-cm) | | | | | | | | | |
| 2 minutes | 2.4 | ND | 6.2 | ND | 11.3 | | | | |
| 5 minutes | 4.3 | ND | 8.3 | ND | 14.8 | | | | |

EP 0 556 843 A1

Table IV Cont.

Properties of PMP Homopolymer and Polybutene Blends

| Components (wt%)[a] | Run 101 | Run 102 | Run 103 | Run 104 | Run 105 | Run 106 | Run 107 | Run 108 | Run 109 |
|---|---|---|---|---|---|---|---|---|---|
| Surface Resistivity ($\times 10^{15}$ ohm/sq) | | | | | | | | | |
| 1 minute | 6.1 | ND | 7.5 | ND | 2.9 | | | | |
| Dielectric Constant | | | | | | | | | |
| 1 KHz | 2.1 | ND | 2.1 | ND | 2.2 | | | | |
| 1 MHz | 2.1 | ND | 2.1 | ND | 2.2 | | | | |
| Dielectric Strength V/mil, 1/16" | | | | | | | | | |
| in oil | 770 | ND | 800 | ND | 790 | | | | |
| Dissipation Factor | | | | | | | | | |
| 1 KHz | 0.0000 | ND | 0.0003 | ND | 0.0003 | | | | |
| 1 MHz | 0.0003 | ND | 0.0006 | ND | 0.0005 | | | | |
| Arc Resistance, Seconds | 200 | ND | 200 | ND | 200 | | | | |

[a] Percent by weight of the component based on the total weight of all components forming the composition.

[b] PMP homopolymer fluff, nominal 20 melt flow. Properties determined on injection molded specimens.

[c] Liquid polymer commercially available from AMOCO, Inc.

[d] Tetrakis(methylene 3-(3,5-di-t-butyl-4-hydroxyphenyl)propionate) methane, antioxidant commercially available from Ciba-Geigy Corporation.

[e] No-break. Usually tested at 5 bars.

[f] Not determined.

The results demonstrate, in Runs 101-107, that the addition of polybutene L-14® and L-100® as a blend component with PMP results in a improvement in notched Izod impact strength. Unmodified PMP homopolymer, in Run 101, is notch sensitive, with Izod impact strength of 0.5 ft-lb/in. The addition of 7.5 weight percent polybutene results in a significant increase in resistance to tear propagation, as indicted by or increase in notched Izod impact strength of the homopolymer. Five weight percent polybutene yields a no break unnotched Izod in each resin, but no improvement in notched Izod. Loadings of polybutene above 7.5 weight percent result in slight additional improvements in notched impact, along with further reductions in tensile strength and flexural modulus. Heat deflection temperature (HDT) was not lowered by blending with polybutenes. Due to softening with higher loading of polybutene, HDTs were typically determined at low load (455 KPa). Loading of 15 to 20 weight percent resulted in improved impact properties, but molded parts appeared to have an oily surface, possibly due to phase separation and migration of polybutene to the surface. Electrical properties are somewhat enhanced, as shown by increased volume resistivity and increased dielectric strength. Polybutene loading can be varied to produce a range of product with a desired balance of impact, flexural, and electrical properties.

The results also demonstrate, in Runs 108 and 109, that 10 weight percent loadings of higher molecular weight polybutene, H-100[®] and H-300[®] , do not result in notched impact modification of the homopolymer, based on notched Izod test results.

Example II

This Example illustrates the properties of blends comprising a polymethylpentene (98.2 mole %)/1-decene (1.8 mole %) copolymer and polybutene.

The experiments were carried out the same as those in Example I, with the exception that a PMP/1-decene copolymer, instead of a PMP homopolymer, was used. The results are given in Table V.

Table V

Properties of PMP/1-Decene Copolymer and Polybutene Blends

| Components (wt%)[a] | Run 201 | Run 202 | Run 203 | Run 204 | Run 205 | Run 206 | Run 207 | Run 208 | Run 209 |
|---|---|---|---|---|---|---|---|---|---|
| PMP/1-decene copolymer[b] | 99.5 | 94.5 | 92.0 | 89.5 | 92.0 | 84.5 | 84.5 | 89.5 | 89.5 |
| Polybutene, L-14[c] | 0 | 5.0 | 7.5 | 10.0 | 0 | 15 | 0 | 0 | 0 |
| Polybutene, L-100 | 0 | 0 | 0 | 0 | 0 | 0 | 15 | 0 | 0 |
| Polybutene, H-100 | 0 | 0 | 0 | 0 | 0 | 0 | 0 | 10 | 0 |
| Polybutene, H-300 | 0 | 0 | 0 | 0 | 0 | 0 | 0 | 0 | 10 |
| Irganox 1010[d] | 0.5 | 0.5 | 0.5 | 0.5 | 0.5 | 0.5 | 0.5 | 0.5 | 0.5 |

Properties

| | Run 201 | Run 202 | Run 203 | Run 204 | Run 205 | Run 206 | Run 207 | Run 208 | Run 209 |
|---|---|---|---|---|---|---|---|---|---|
| Notched Izod (ft-lb/in) | 0.5 | 0.5 | 6.8[NB] | 9.0[NB] | 0.6 | 7.7[NB] | 5.5[NB] | 0.4 | 1.0 |
| Unnotched Izod (ft-lb/in) | 2.8 | NB | NB | NB | NB | NB | NB | NB | 15.9 |
| Tensile Strength (Ksi, 50 mm/min) | | | | | | | | | |
| @ Yield | 3.9 | 2.6 | 2.5 | 2.3 | ND[f] | | | | |
| @ Break | 2.2 | 1.6 | 1.5 | 1.6 | ND | | | | |
| Elongation, % | | | | | | | | | |
| @ Yield | 11 | 24 | 27 | 29 | ND | | | | |
| @ Break | 94 | 168 | 147 | 171 | ND | | | | |
| HDT (°C at 66 psi) | 76 | 77 | 73 | 73 | ND | | | | |
| Flex Mod (Ksi) | 205 | ND | 52 | ND | ND | | | | |
| Volume Resistivity (X$10^{15}$, ohm-cm) | | | | | | | | | |
| 2 minutes | 4.1 | ND | 29.0 | ND | 12.1 | | | | |
| 5 minutes | 6.3 | ND | 40.2 | ND | 19.3 | | | | |

Table V Cont.

Properties of PMP/1-Decene Copolymer and Polybutene Blends

| Components (wt%)[a] | Run 201 | Run 202 | Run 203 | Run 204 | Run 205 | Run 206 | Run 207 | Run 208 | Run 209 |
|---|---|---|---|---|---|---|---|---|---|
| Surface Resistivity (x10$^{15}$ ohm/sq) | | | | | | | | | |
| 1 minute | 6.3 | ND | 10.0 | ND | 5.0 | | | | |
| Dielectric Constant | | | | | | | | | |
| 1KHz | 2.1 | ND | 2.2 | ND | 2.2 | | | | |
| 1MHz | 2.1 | ND | 2.2 | ND | 2.2 | | | | |
| Dielectric Strength V/mil, 1/16" in oil | 760 | ND | 800 | ND | 790 | | | | |
| Dissipation factor | | | | | | | | | |
| 1KHz | 0.0000 | ND | 0.0004 | ND | 0.0004 | | | | |
| 1MHz | 0.0003 | ND | 0.0005 | ND | 0.0005 | | | | |
| Arc Resistance, Seconds | 200 | ND | 200 | ND | 190 | | | | |

a  Percent by weight of the component based on the total weight of all components forming the composition.

b  PMP/1-decene copolymer fluff, nominal melt flow 20.  Properties determined on injection molded specimens.

c  Liquid polymer commercially available from AMOCO, Inc.

d  Tetrakis(methylene 3-(3,5-di-t-butyl-4-hydroxyphenyl)propionate)methane, antioxidant commercially available from Ciba-Geigy Corporation.

e  No-break.  Usually tested at 5 bars.

f  Not determined.

The results again show, in Runs 201-207, that the addition of polybutene L-14® and L-100® as a blend component results in a dramatic improvement in notched Izod impact strength. Unmodified PMP/1-decene copolymer, Run 201, is notch sensitive, with Izod impact strengths of 0.5 ft-lb/in. The addition of 7.5 weight percent polybutene results in significant increase in Izod impact to "no break" values. Five weight percent polybutene yields a no break unnotched Izod in each resin, but no improvement in notched Izod. Loadings of polybutene above 7.5 weight percent result in slight additional improvements in notched impact, along with further reductions in tensile strength and flexural modulus. Heat deflection temperature (HDT) was not lowered by blending with polybutenes. Due to softening with higher loading of polybutene, HDTs were typically determined at low load (455 KPa). Electrical properties are enhanced, as demonstrated by increased volume resistivity and increased dielectric strength.

The results also demonstrate, in Runs 208 and 209, that 10 weight percent loadings of higher molecular weight polybutene, H-100® and H-300®, do not result in significant notched impact modification of PMP/1-decene copolymers, based on notched Izod test results.

Example III

This Example further demonstrates that addition of polybutene as a blend component with a PMP (97.5 mole %)/1-hexadecene (2.5 mole %) copolymer further improves the impact properties of the blend products.

The experiments were carried out the same as those illustrated in Example I with, the exception that a PMP/1-hexadecene copolymer, was used instead of a PMP homopolymer. The results are given in Table VI.

## Table VI

### Properties of PMP/1-Hexadecene Copolymer and Polybutene Blends

| Components (wt%)[a] | Run 301 | Run 302 | Run 303 | Run 304 | Run 305 | Run 306 | Run 307 | Run 308 | Run 309 |
|---|---|---|---|---|---|---|---|---|---|
| PMP/1-hexadecene copolymer[b] | 99.5 | 94.5 | 92.0 | 89.5 | 92.0 | 84.5 | 84.5 | 89.5 | 89.5 |
| Polybutene, L-14[c] | 0 | 5.0 | 7.5 | 10.0 | 0 | 15 | 0 | 0 | 0 |
| Polybutene, L-100 | 0 | 0 | 0 | 0 | 7.5 | 0 | 15 | 0 | 0 |
| Polybutene, H-100 | 0 | 0 | 0 | 0 | 7.0 | 0 | 0 | 10 | 0 |
| Polybutene, H-300 | 0 | 0 | 0 | 0 | 7.0 | 0 | 0 | 0 | 10 |
| Irganox 1010[d] | 0.5 | 0.5 | 0.5 | 0.5 | 0 | 0.5 | 0.5 | 0.5 | 0.5 |

### Properties

| | Run 301 | Run 302 | Run 303 | Run 304 | Run 305 | Run 306 | Run 307 | Run 308 | Run 309 |
|---|---|---|---|---|---|---|---|---|---|
| Notched Izod (ft-lb/in) | 0.5 | 0.5 | $11^{NB}$[e] | $14^{NB}$ | $11.7^{NB}$ | $14.4^{NB}$ | $14.4^{NB}$ | 1.9 | 0.8 |
| Unnotched Izod (ft-lb/in) | NB | NB | NB | NB | NB | NB | NB | NB | NB |
| Tensile Strength (Ksi, 50 mm/min) @ Yield | 3.0 | 2.2 | 2.0 | 1.8 | $ND^f$ | | | | |
| @ Break | 1.7 | 1.3 | 1.4 | 1.2 | ND | | | | |
| Elongation (%) @ Yield | 15 | 27 | 29 | 32 | ND | | | | |
| @ Break | 96 | 210 | 183 | 220 | ND | | | | |
| HDT (°C at 66 psi) | 73 | 75 | 71 | 73 | | | | | |
| Flex Mod (Ksi) | 133 | ND | 36 | ND | ND | | | | |
| Volume Resistivity ($\times 10^{15}$, ohm-cm) 2 minutes | 6.5 | ND | 9.1 | ND | 10.8 | | | | |
| 5 minutes | 8.5 | ND | 14.5 | ND | 16.1 | | | | |

EP 0 556 843 A1

Table VI Cont.

Properties of PMP/1-Hexadecene Copolymer and Polybutene Blends

| Components (wt%)[a] | Run 301 | Run 302 | Run 303 | Run 304 | Run 305 | Run 306 | Run 307 | Run 308 | Run 309 |
|---|---|---|---|---|---|---|---|---|---|
| Surface Resistivity (x10$^{15}$ ohm/sq) | | | | | | | | | |
| 1 minute | 4.0 | ND | 6.7 | ND | 6.7 | | | | |
| Dielectric Constant | | | | | | | | | |
| 1KHz | 2.1 | ND | 2.1 | ND | 2.2 | | | | |
| 1MHz | 2.1 | ND | 2.1 | ND | 2.2 | | | | |
| Dielectric Strength V/mil, 1/16" in oil | 780 | ND | 800 | ND | 820 | | | | |
| Dissipation Factor | | | | | | | | | |
| 1KHz | 0.0001 | ND | 0.0005 | ND | 0.0004 | | | | |
| 1MHz | 0.0003 | ND | 0.0005 | ND | 0.0005 | | | | |
| Arc Resistance, Seconds | 210 | ND | 200 | ND | 190 | | | | |

a   Percent by weight of the component based on the total weight of all components forming the composition.

b   PMP/1-hexadecene copolymer fluff, nominal melt flow 20. Properties were determined on injection molded specimens.

c   Liquid polymer L-14 commercially available from AMOCO, Inc.

d   Tetrakis(methylene 3-(3,5-di-t-butyl-4-hydroxyphenyl)propionate)methane, antioxidant commercially available from Ciba-Geigy Corporation.

e   No-break. Usually tested at 5 bars.

f   Not determined.

The results given in Table VI, again, demonstrate, in Runs 301-307, the addition of polybutene L-14® and L-100® as a blend component results in a dramatic improvement in notched Izod impact strength. Unmodified PMP/1-hexadecene copolymer, Run 301, is notch sensitive, with Izod impact strengths of 0.5 ft-lb/in. The addition of 7.5 weight percent polybutene results in significant increase in Izod impact to "no break" values. The impact energy was absorbed in the part and crack propagation was halted. Electrical properties are somewhat enhanced, as shown by increased volume resistivity and increased dielectric strength.

The results also demonstrate, in Runs 308 and 309, that 10 weight percent loadings of higher molecular weight polybutene, H-100® and H-300®, are much less effective notched impact modifiers of PMP/1-hexadecene copolymers, based on notched Izod test results.

16

Example IV

This Example demonstrates that addition of polybutene as a blend component with polypropylene does not improve notched impact values of the polypropylene. It should be noted that a linear alpha-olefin, is the starting monomer for polypropylene.

The experiments were carried out the same as those illustrated in Example I, with the exception that polypropylene was used instead of a PMP homopolymer. The results are given in Table VII.

<u>Table VII</u>

<u>Comparative Properties of Polypropylene/Polybutene Blends</u>

| Components (Wt.%)[a] | Run 401 | Run 402 | Run 403 | Run 404 | Run 405 |
|---|---|---|---|---|---|
| PP[b] | 99.5 | 89.5 | 79.5 | 89.5 | 89.5 |
| L-14 polybutene[c] | - | 10 | 20 | - | - |
| L-100 polybutene[c] | - | - | - | 10 | - |
| H-100 polybutene[c] | - | - | - | - | 10 |
| Irganox 1010 | 0.5 | 0.5 | 0.5 | 0.5 | 0.5 |
| Properties | | | | | |
| Notched Izod (Ft-lb/in) | 0.4 | 0.5 | 0.3 | 0.4 | 0.4 |
| Unnotched Izod (Ft-lb/in) | 12.9 | NB[e] | 4.6 | NB | NB |
| Tensile Strength (Ksi, 50 mm/min) | | | | | |
| @ Yield | 5.2 | 3.9 | 2.2 | 3.9 | 4.0 |
| @ Break | 4.6 | 3.4 | 2.2 | 3.5 | 3.8 |
| Elongation, % | | | | | |
| @ Yield | 13.4 | 21.4 | 20.1 | 21.6 | 19.3 |
| @ Break | 27 | 49 | 20 | 48 | 35 |
| HDT (°C at 264 psi) | 55 | 54 | 45 | 53 | 53 |

[a] Percent by weight of the component based on the total weight of all components forming the composition.

[b] Non-pelletized PP homopolymer fluff, nominal 12 melt flow.

[c] Liquid polybutene commercially available from Amoco, Inc.

[d] Tetrakis(methylene 3-(3,5-di-t-butyl-4-hydroxyphenyl)propionate) methane, antioxidant commercially available from Ciba-Geigy Corporation.

[e] No-break value.

Example V

This Example illustrates that blends of homopolymers of PMP or copolymers of PMP and either 1-decene or 1-hexadecene, as described in Examples II and III, respectively, have high clarity.

The clarity of the polymer blends were determined by measurements of haze and light transmission according to the procedure of ASTM D1003-88 employing Hunter Lab Haze Meter, model D55H. The results showed that clarity of PMP compounds was not reduced by blending with polybutene, as indicated by measurements of light transmission and haze. Homopolymer, as well as 1-decene and 1-hexadecene copolymer, blends containing 7.5 or 10 weight percent L-14®, L-14E®, or L-100® polybutene, based on the total weight of the final blend product, have high clarity, with light transmission of 91.5 to 92.4%. These values are the same as those obtained for unblended PMP homopolymers and copolymers. Haze values for blends containing 7.5 weight percent L-14®, L-14E®, or L-100® polybutene, based on the total weight of the final blend product, range from 4.8 to 5.9%, lower than the 9% obtained for unblended PMP polymers. These results indicate that the inventive blend compositions do not diminish the high clarity of PMP homopolymers and copolymers.

Homopolymer, as well as 1-decene and 1-hexadecene copolymer, blends containing 7.5 or 10 weight percent H-100® or H0300® polybutene, based on the weight of the final blend product, result in significant haze or are opaque.

Example VI

This Example illustrates that hydrogenated polybutenes, i.e., L-14E®, which have increased resistance to thermal oxidation, can be used in these formulations in blends with homopolymers of PMP or copolymers of PMP and either 1-decene or 1-hexadecene.

Homopolymers of PMP and copolymers of PMP/1-Hexadecene were blended with five and ten weight percent polybutene, either L-14® or L-14E®, both commercially available from Amoco, Inc. All eight blends had fairly equivalent impact properties, but blends of PMP polymers and L-14E polybutene, at both five and ten weight percent L-14E®, did not yellow; i.e., did not oxidize, and remained clear after injection molding. Blends of PMP polymers and L-14® polybutene, at both five and ten weight percent L-14, yellowed, i.e., oxidized, after injection molding.

Based on the results presented in the Examples, the present invention is well adapted to carry out the objects and attain the ends mentioned. While this invention has been described in detail for the purpose of illustration, it is not to be construed as limited thereby but is intended to cover all changes and modifications within the spirit and scope thereof.

**Claims**

1. A polymer composition comprising:
   (a) about 80 to about 99 weight percent, based on the weight of the total composition, of a stabilized, stereoregular polymer of a branched, higher alpha-olefin and
   (b) about 1 to about 20 weight percent, based on the total weight of the final composition, of a liquid polybutene.

2. A composition according to claim 1, wherein said branched, higher alpha-olefin has from 6 to 12 carbon atoms per molecule in particular wherein said branched, higher alpha-olefin is 4-methyl-1-pentene.

3. A composition according to claim 1, wherein said stereoregular polymer is a copolymer which further comprises an alpha-olefin comonomer having from about 8 to about 16 carbon atoms per molecule, in particular wherein said alpha-olefin comonomer is 1-hexadecene or 1-decene.

4. A composition according to one of the preceding claims, wherein said stabilized, stereoregular polymer of a branched, higher alpha-olefin is stabilized with a hindered phenol, in particular wherein said hindered phenol is present within a range of about 0.05 to about 2 parts by weight per 100 parts by weight of stereoregular polymer of a branched, higher alpha-olefin.

5. A composition according to one of the preceding claims, wherein said polybutene has a number average molecular weight of less than about 500; a viscosity at 38°C of less than about 2500 SUS; a viscosity at 99°C of less than about 100 SUS; and a density of less than about 0.718 g/cc.

6. A composition according to one of the preceding claims comprising from about 1 to about 10 weight percent polybutene, based on the total weight of the final composition.

7. A composition according to claim 1 comprising:

   (a) 90 to 95 weight percent, based on the weight of the total composition, of the stabilized, stereoregular polymer of 4-methyl-1-pentene, in particular wherein said stereoregular polymer of 4-methyl-1-pentene is a copolymer which further comprises an alpha-olefin comonomer having from about 8 to about 16 carbon atoms per molecule and

   (b) 5 to 10 weight percent, based on the total weight of the final composition, of the liquid polybutene.

8. A composition according to claim 7 having a notched Izod impact value of greater that or equal to 1.6 foot/pound per inch, a no-break unnotched Izod value, an elongation at yield within a range of 15 to 50 percent, an elongation at break within a range of 150 to 250 percent, and a flexural modulus within a range of 20 to 300 ksi.

9. A process to prepare a composition comprising physically blending from about 80 to about 99 weight percent, based on the total weight of the final composition, of a stabilized, stereoregular polymer of a branched, higher alpha-olefin, preferably 4-menthyl-1-pentene, and from about 1 to about 20 weight percent, based on the total weight of the final composition, of a liquid polybutene.

10. A process according to claim 9 wherein said physical blending is extrusion blending or dry blending followed by extrusion blending.

11. A process according to claim 10 wherein said extrusion blending occurs at a temperature within a range of about 260° to about 285°C, for a time within range of about 2 seconds to about 5 minutes, and at a mixing speed within a range of from about 50 to about 500 rpm.

12. An article of manufacture produced from the composition of one of the claims 1 to 8, in particular wherein the article is selected from the group consisting of film, pipe, injection molded products and mixtures thereof.

European Patent Office    **EUROPEAN SEARCH REPORT**    Application Number

EP 93 10 2645

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 396 782 (DAINICHI-NIPPON)<br>* page 2, line 3 - line 25 *<br>* page 3, line 9 - line 19 *<br>* page 6, line 11 - line 32 *<br>* page 13, line 34 - page 14, line 4 * | 1-8,12 | C08L23/20 |
| A | * page 8, line 9 - line 25 * | 9-11 | |
| A | EP-A-0 138 300 (MITSUI PETROCHEMICAL)<br>* page 13, line 1 - line 11; example 7 * | 1-12 | |
| A | GB-A-1 184 871 (IMPERIAL CHEMICAL)<br>* page 1, column 1, line 28 - page 2, column 1, line 10 * | 3 | |

TECHNICAL FIELDS SEARCHED (Int. Cl.5)

C08L

The present search report has been drawn up for all claims

| Place of search | Date of completion of the search | Examiner |
|---|---|---|
| THE HAGUE | 24 MAY 1993 | SCHMIDT H.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)